# EUROPÄISCHE PATENTSCHRIFT

(11) **EP 0 943 419 B1**
(45) Veröffentlichungstag und Bekanntmachung des Hinweises auf die Patenterteilung: **02.07.2003**
(21) Anmeldenummer: 99102192.4
(22) Anmeldetag: 04.02.1999
(51) Int. Cl.: B29C 65/34

(54) **Thermoelement, Verfahren zum Verbinden von Kunststoffrohrenden unter Verwendung des Thermoelementes und Elektroschweissmuffe zur Durchführung des Verfahrens**
Thermic element, process for joining ends of plastic pipes making use of the thermic element and electrofusion coupler to complete the process
Thermo-élément, procédé pour fixer deux extrémités de tubes en plastique avec le thermo-élément et manchon d'électrosoudage pour réaliser le procédé

(30) Priorität: 20.03.1998 DE 19812362
(43) Veröffentlichungstag der Anmeldung: 22.09.1999
(73) Patentinhaber: isoplus Vertriebsgesellschaft mbH, 83026 Rosenheim (DE)
(72) Erfinder: Repar, Bruno, 83026 Rosenheim (DE)
(74) Vertreter: Patentanwälte Hauck, Graalfs, Wehnert, Döring, Siemons, Schildberg

(56) Entgegenhaltungen:
- EP-A- 0 258 827
- EP-A- 0 645 234
- DE-C- 802 282
- DE-C- 19 652 712
- US-A- 2 930 634
- US-A- 3 996 402
- US-A- 5 125 690

## Beschreibung

Die vorliegende Erfindung betrifft ein Thermoelement mit den Merkmalen des Oberbegriffs des Patentanspruches 1.

Es ist bekannt, Kunststoffrohre mit Hilfe von sogenannten Elektroschweißmuffen zu verschweißen. Hierbei wird die zylinderförmig ausgebildete und aus Kunststoff bestehende Elektroschweißmuffe über die Endbereiche der zu verbindenden Rohre geschoben. Die Muffe wird dann beispielsweise durch Druckaufbringung an den Rohrenden fixiert und/oder durch Wärmebehandlung auf die Rohrenden aufgeschrumpft.

Es ist eine derartige Elektroschweißmuffe bekannt, die als Thermoelement einen Kupferdraht enthält, der schlangenförmig in die Muffe eingebracht wird. Durch Anlegen eines elektrischen Stromes an das Thermoelement über geeignete Schweißtransformatoren, wird dieses auf die erforderliche Plastifizier-Schmelztemperatur der zu verschweißenden Kunststoffrohre erwärmt. Das das Thermoelement umgebende Material wird dabei aufgeschmolzen bzw. plastifiziert, so daß die Rohrenden mit der Muffe in der Form eines Muffenüberlappstoßes verschweißt werden.

Es hat sich gezeigt, daß sich durch die Verwendung eines schlangenförmig in die Elektroschweißmuffe eingebrachten Drahtes nur unzureichende Schweißergebnisse erzielen lassen.

Ferner ist aus der EP-A-0 645 234 ein Thermoelement bekannt, das nicht für eine Elektroschweißmuffe zur Erstellung eines Muffenüberlappstoßes vorgesehen ist. Vielmehr. ist in dieser Veröffentlichung ein Thermoelement für einen anderen Einsatzzweck offenbart, das relativ kleine Rundlöcher aufweist, mit denen die gewünschte innige Materialverbindung innerhalb der Schweißzone nur unvollkommen hergestellt werden kann.

Auch aus der DE 802 282 C ist ein Thermoelement bekannt, das nicht für eine Elektroschweißmuffe vorgesehen ist. Bei dem in dieser Veröffentlichung beschriebenen Verfahren werden lediglich zwei Rohrabschnitte mit Hilfe eines Überlappstoßes miteinander verbunden. Eine gesonderte Elektroschweißmuffe ist hierfür nicht vorgesehen. Das verwendete Thermoelement, das mit Schlitzen versehen ist, hat einen relativ geringen Anteil an Ausnehmungen, so daß auch hier nur eine unvollkommene Materialverbindung innerhalb der Schweißzone erreicht werden kann.

Der Erfindung liegt die Aufgabe zugrunde, ein Thermoelement der angegebenen Art zu schaffen, mit dem besonders gute Schweißergebnisse erreichbar sind.

Diese Aufgabe wird erfindungsgemäß bei einem Thermoelement der angegebenen Art durch die Merkmale des Patentanspruchs 1 gelöst.

Das erfindungsgemäß ausgebildete Thermoelement ist somit als Lochband ausgebildet. Die Bandform des Thermoelementes sichert einen relativ breiten Schweißbereich, somit eine wesentlich breitere Schweißzone als bei Verwendung eines Drahtes. Die im Metallband vorgesehenen Rundlöcher stellen einen Kontakt des aufgeschmolzenen Materiales der Muffe und des Rohres im Bereich des Elektroschweißbandes sicher, so daß trotz der relativ großen Erstreckung in Breitenrichtung des Bandes über die gesamte Breite desselben ein inniger Materialkontakt erfolgt. Die Erfindung sichert somit sowohl einen breiten Schweißbereich als auch eine innige Materialverbindung innerhalb der Schweißzone.

Der Abstand zwischen benachbarten Rundlöchern des Lochbandes ist geringer als der Lochdurchmesser. Ferner sind die Rundlöcher benachbandes Lachreihen versetzt zu einander angeordnet, so daß sich insgesannt ein Lochmuster mit darwlischen angeordneten, relativ schmaten Stegen ergibt.

Das Metallband besteht vorzugsweise aus einer Gitter- bzw. Siebstruktur.

Beste Schweißergebnisse wurden mit einer Ausführungsform eines Lochbandes erzielt, bei dem die Rundlöcher einen Durchmesser bzw. eine Breite von 2-6 mm und einen Abstand von 0,5-2 mm besitzen.

Wesentlich ist, daß das erfindungsgemäß ausgebildete Metallband eine solche Dicke besitzt, daß es biegbar ist und somit an die Rundform der zu verbindenden Rohre angepasst werden kann.

Zum Anlegen des Schweißstromes besitzt das Band zweckmässigerweise zwei gegenüber seiner Längsachse abgewinkelte Anschlußabschnitte für einen Schweißtrafo. Diese Anschlußabschnitte unterscheiden sich in ihrer Struktur vorzugsweise nicht vom restlichen Band und haben auch die gleiche Breite wie dieses. Die Anschlußabschnitte befinden sich vorzugsweise an den Bandenden und erstrecken sich zweckmässigerweise rechtwinklig zur Bandlängsachse.

Die Dicke des Bandes beträgt vorzugsweise 0,4-0,6 mm.

Als bevorzugtes Metall für das Thermoelement wird Kupfer verwendet.

Die vorliegende Erfindung betrifft ferner ein Verfahren zum Verbinden von 2 Kunststoffrohrenden durch Widerstandsschweißen unter Verwendung einer Elektroschweißmuffe und eines Thermoelementes. Dieses Verfahren soll erfindungsgemäß so ausgestaltet werden, daß sich hiermit besonders gute Schweißergebnisse erzielen lassen.

Erfindungsgemäß findet ein Thermoelement der vorstehend beschriebenen Art Verwendung. Das erfindungsgemäße Verfahren ist dabei durch die folgenden Schritte gekennzeichnet:
a. Aufschieben der Elektroschweißmuffe auf die beiden Rohrenden zur Überbrückung derselben;
b. Einlegen des Thermoelementes zwischen Rohrwandung und Elektroschweißmuffenwand;
c. Aufschrumpfen der Elektroschweißmuffe auf die Rohrenden durch Wärmebehandlung der Muffe; und
d. Anlegen eines elektrischen Stromes an das Thermoelement zur Erhitzung desselben auf die erforderliche Plastifizier/Schmelztemperatur des Kunststoffes der Rohrenden.

Wesentlich ist, daß bei dem erfindungsgemäßen Verfahren das Thermoelement zwischen Rohrwandung und Elektroschweißmuffenwandung gelegt, d.h. eingeschoben wird. Um beide Rohrenden mit der Muffe zu verschweißen, finden zweckmässigerweise 2 Thermoelemente Verwendung. Bei dem erfindungsgemäßen Verfahren findet somit ein loses Thermoelement Verwendung, das erst direkt vor der Montage eingelegt wird. Die getrennte Lieferform von Thermoelement und Muffe gewährleistet ein Höchstmaß an Sauberkeit sowie eine ideale Überwindung von Durchmessertoleranzen und Ovalität an den Mantelrohren. Mit dem erfindungsgemäßen Verfahren wird daher eine besonders gute Anpassung an die vorhandenen Gegebenenheicen und eine besonders hohe Flexibilität der Anwendung erreicht.

Die beiden Thermoelemente werden zweckmässigerweise den Endbereichen der Elektroschweißmuffe zugeordnet. Mit anderen Worten, sie werden nach entsprechender Biegung und Anpassung an die Oberfläche der zu verschweißenden Rohre so zwischen Rohr und Muffe eingelegt, daß sie mit dem Ende der Muffe abschließen. Dabei lässt man die Anschlußabschnitte für den Schweißtrafo von der Muffe nach außen vorstehen, so daß der Schweißtrafo bequem angeschlossen werden kann. Nach dem Schweißvorgang werden die Anschlußabschnitte vorzugsweise abgeschnitten.

Die Länge des Schweißbandes ist so bemessen, daß nach dem Biegen und Einlegen zwischen den Schweißbandenden ein Spalt verbleibt, der beispielsweise eine Größenordnung von etwa 2 mm besitzen kann. Ein derartiger Abstand der Bandenden ist erforderlich, um Kurzschlüsse zu vermeiden. Ein zu großer Abstand hat den Nachteil, daß sich die Schweißzone nicht über den gesamten Umfang des Rohres bzw. der Muffe erstreckt.

Um möglichst einen engen Kontakt zwischen der Elektroschweißmuffe und der Rohrwandung herzustellen, wird die Elektroschweißmuffe vorzugsweise durch Druckaufbringung gegen die Rohrenden gepreßt, und zwar zweckmässigerweise durch das Anlegen von Spanngurten.

Wenn nach dem Verschweißen zwischen der Elektroschweißmuffe und den Rohrwandungen ein Freiraum verbleibt, so wird dieser zweckmässigerweise ausgeschäumt.

Das erfindungsgemässe Verfahren wird vorzugsweise zum Verschweißen der Kunststoffummantelung von gasförmige oder flüssige Medien führenden Rohren eingesetzt. Speziell wird es zum Verschweißen der ausgeschäumten Mantelrohre von gasförmige oder flüssige Medien führenden Rohren verwendet. Derartige Rohre finden beispielsweise in Fernwärmenetzten Verwendung, wobei das erfindungsgemäße Verfahren besonders zweckmässig ist für alle Fernwärmenetze mit erhöhten Betriebsbedingungen und Bodenverhältnissen, wie beispielsweise bei Grundwasser und drückendem Wasser. Besonders gute Ergebnisse werden bei einem Einsatz im sogenannten Großrohrbereich erzielt.

Derartige Mantelrohre bestehen beispielsweise aus einem inneren Mediumrohr, das das zu fördernde gasförmige oder flüssige Medium führt. Das Mediumrohr ist von einem Schaummaterial umgeben, beispielsweise einem PUR-Werkschaum. Das Schaummaterial wird von einem äußeren Mantelrohr umgeben, beispielsweise aus PEHD.

Die zu verbindenden Rohrenden sind zweckmäßigerweise so ausgebildet, daß das Mediumrohr das Ende des Mantelrohres und Schaumstoffes eine gewisse Strecke überragt. Nach dem Aufbringen und Aufschweißen der Muffe mit Hilfe der beiden Thermoelemente verbleibt somit zwischen Muffe und Mediumrohr ein Freiraum, der nach dem Verschweißen ausgeschäumt wird, wie vorstehend erwähnt, beispielsweise ebenfalls mit Hilfe eines PUR-Werkschaumes.

Die verwendete Elektroschweißmuffe besteht vorzugsweise aus dem gleichen Material wie das Mantelrohr, nämlich PEHD.

Die Elektroschweißmuffe kann vor dem Verschäumen einer Luftdruckprobe von 0,3 bar unterzogen und abgeseift werden. Die entsprechenden Ergebnisse und die des Schweißvorganges sind zu protokollieren. Nach dem Ausschäumen werden die in der Muffe vorgesehenen Schaumeinfüll- und Entlüftungsöffnungen mit Stopfen, vorzugsweise BE-Stopfen, abgedichtet.

Schließlich betrifft die Erfindung eine Elektroschweißmuffe zur Durchführung des vorstehend beschriebenen Verfahrens mit zylindrischer Form mit den Merkmalen des Patentanspruchs 15. Die Muffe ist als Schrumpfmuffe ausgebildet. Der Schrumpfeffekt wird beispielsweise dadurch erzielt, daß das Material der Muffe einen Memory Effekt besitzt, d.h. bei Wärmezufuhr eine Form mit einem geringeren Durchmesser einnimmt und diese beibehält.

Die erfindungsgemäß ausgebildete Muffe ist ferner dadurch gekennzeichnet, daß sie längsmittig einen radial erweiterten Bereich besitzt. Die Anordnung dieses Bereiches ist so abgestimmt, daß nach dem Aufschieben der Muffe auf die Rohrenden der erweiterte Bereich am jeweiligen Endpunkt der Mantelrohre beginnt. Der sich radial innerhalb des erweiterten Bereiches befindende Freiraum wird nach dem Verschweißen ausgeschäumt. Hierzu besitzt die Muffe vorzugsweise eine Einfüll- und eine Entlüftungsöffnung sowie diese verschlie-Bende Stopfen. Nach dem Ausschäumen werden beide Öffnungen mit den Stopfen, die vorzugsweise aus PE bestehen, abgedichtet.

Die Erfindung wird nachfolgend anhand eines Ausführungsbeispiels in Verbindung mit der Zeichnung im einzelnen erläutert. Es zeigen:
- Figur 1: eine Draufsicht auf ein Thermoelement;
- Figur 2: eine räumliche Darstellung einer Verbindung von 2 Rohrenden mittels einer Elektroschweißmuffe, wobei die Muffe aufgeschnitten dargestellt ist; und
- Figur 3: eine Seitenansicht eines Rohrendes mit dem zugeordneten Teil der Elektroschweißmuffe von Figur 2, die teilweise im Schnitt dargestellt ist.

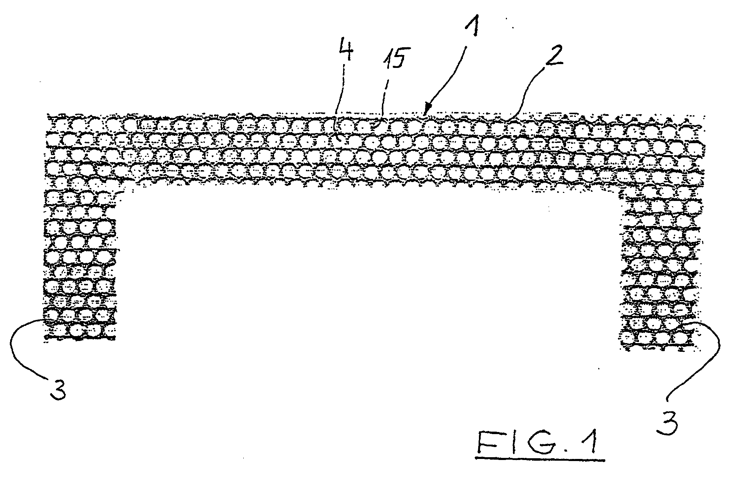

Bei dem in Figur 1 in der Draufsicht dargestellten Thermoelement 1 handelt es sich um ein Metallband, das als Lochband ausgebildet ist. Das Metallband besitzt einen Längsabschnitt 2, von dem sich rechtwinklig hierzu zwei Anschlußabschnitte 3 zum Anschließen von Schweißtransformatoren erstrecken. Die Anschlußabschnitte 3 gehen von den Endbereichen des Längsabschnittes 2 aus.

Das Metallband besteht aus Kupfer und ist als Lochband ausgebildet. Das Lochband hat eine Vielzahl von reihenförmig angeordneten Rundlöchern 4, die durch schmale Metallstege 15 voneinander getrennt sind. Hierbei sind die Löcher 4 der einen Reihe versetzt zu den Löchern 4 der benachbarten Reihe angeordnet.

Bei dem hier dargestellten Ausführungsbeispiel besitzen die Rundlöcher 4 einen Durchmesser von 4 mm. Der Abstand zwischen zwei Löchern beträgt an der engsten Stelle 1 mm. Die Dicke des Bandes beträgt 0,5 mm.

Das Thermoelement wird lose zusammen mit einer Elektroschweißmuffe verwendet. Für den Gebrauch wird es entsprechend dem Rohrumfang gebogen und zwischen Elektroschweißmuffe und Rohr eingeschoben. Im eingeschobenen Zustand soll zwischen den beiden Bandenden mindestens ein Abstand von 2 mm verbleiben, um das Auftreten von Kurzschlüssen zu vermeiden, andererseits jedoch den Rohrumfang möglichst weitgehend zu überdecken.

Lochdurchmesser und Lochabstand bleiben unabhängig von der Länge des Metallbandes und damit dem Durchmesser des zu verbindenden Rohres gleich.

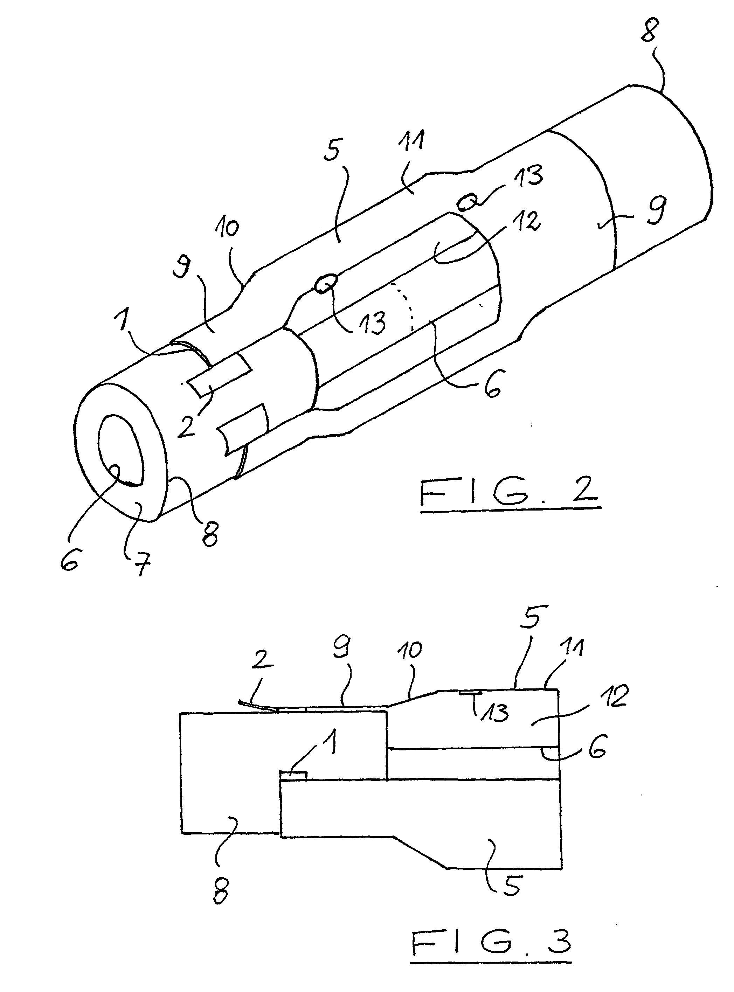

Figur 2 zeigt eine räumliche Ansicht einer Verbindung zweier Kunststoffrohre mit Hilfe einer Elektroschweißmuffe 5, bei der das in Figur 1 dargestellte Thermoelement 1 Verwendung findet. Die Elektroschweißmuffe 5 besteht ebenfalls aus Kunststoff (PE) und ist etwa zylindrisch ausgebildet. Sie besitzt einen Endabschnitt 9 mit geringem Durchmesser, einen mittleren Abschnitt 5 mit größerem Durchmesser und einem zweiten Endabschnitt 9 ebenfalls mit geringerem Durchmesser. Die Übergänge zwischen den verschiedenen Abschnitten werden von Schrägabschnitten 10 gebildet.

Die zu verbindenden Rohre sind folgendermaßen ausgebildet:

Sie bestehen aus einem innerem Mediumrohr, das das zu fördernde gasförmige oder flüssige Medium aufnimmt. Dieses Mediumrohr 6 ist von einer Schaumschicht 7, beispielsweise aus PUR-Werkschaum, umgeben, die wiederum von einem Mantelrohr 8 aus PEHD umgeben ist. Mit Hilfe der Elektroschweißmuffe 5 werden die beiden Mantelrohrendabschnitte der zu verbindenden Rohre miteinander verschweißt.

Figur 3 zeigt einen Teil der Rohrverbindung von Figur 2 im Teilschnitt. Man erkennt, daß sich die Muffe 5 über den Endabschnitt eines Mantelrohres 8 mit ihrem Abschnitt 9 mit kleinerem Durchmesser erstreckt. Bei der Elektroschweißmuffe 5 handelt es sich um eine Schrumpfmuffe, die nach dem Einlegen eines Thermoelementes 1 zwischen Muffenabschnitt 9 und Mantelrohr 8 durch äußere Wärmeeinwirkung auf das Mantelrohr 8 aufgeschrumpft wird. Das Thermoelement 1 wird an beiden Muffenenden eingelegt, und zwar so, daß sich seine Anschlußabschnitte 3 aus der Muffe heraus erstrecken. In Figur 2 ist der Abstand zwischen den beiden Anschlußabschnitten 3 der Thermoelementes 1 übertrieben dargestellt.

Durch Anlegen eines elektrischen Stromes über die Anschlußabschnitte 3 wird das Thermoelement auf die Erweichungstemperatur des Materiales des Mantelrohres 8 und der Elektroschweißmuffe 5 erhitzt. Das Material wird plastifiziert und dringt dabei durch die Löcher 4 des Thermoelementes, so daß nach dem Erstarren eine innige Verbindung zwischen beiden Teilen entsteht.

Nach Beendigung des Schweißvorganges wird der Freiraum 12 zwischen Mediumrohr und erweitertem Muffenabschnitt 11 über 2 Öffnungen der Muffe ausgeschäumt, beispielsweise mit PUR-Muffenschaum. Danach werden die Öffnungen mittels Stopfen 13 verschlossen.

## Patentansprüche

1. Thermoelement (1) zur Durchführung eines Widerstandsschweißvorganges zum Verbinden von zwei Kunststoffrohrenden, das als Metallband ausgebildet ist, das eine Vielzahl von Rundlöchern (4) aufweist, **dadurch gekennzeichnet, daß** die Rundlöcher (4) benachbarter Lochreihen versetzt zueinander angeordnet sind, daß der Abstand zwischen benachbarten Rundlöchern (4) geringer ist als der Lochdurchmesser und daß das Thermoelement (1) für eine Elektroschweißmuffe (5) zur Erstellung eines Muffenüberlappstoßes vorgesehen ist.

2. Thermoelement nach Anspruch 1, **dadurch gekennzeichnet, daß** das Metallband aus einer Gitter- bzw. Siebstruktur besteht.

3. Thermoelement nach einem der vorangehenden Ansprüche, **dadurch gekennzeichnet, daß** die Rundlöcher (4) einen Durchmesser bzw. eine Breite von 2-6 mm und einen Abstand von 0,5-2 mm besitzen.

4. Thermoelement nach einem der vorangehenden Ansprüche, **dadurch gekennzeichnet, daß** das Metallband (2) gegenüber seiner Längsachse abgewinkelte Anschlußabschnitte (3) für einen Schweißtrafo aufweist.

5. Thermoelement nach Anspruche 4, **dadurch gekennzeichnet, daß** sich die Anschlußabschnitts (3) an den Bandenden befinden.

6. Thermoelement nach Anspruch 4 oder 5, **dadurch gekennzeichnet, daß** sich die Anschlußabschnitte (3) rechtwinklig zur Bandlängsachse erstrecken.

7. Thermoelement nach einem der vorangehenden Ansprüche, **dadurch gekennzeichnet, daß** es aus Kupfer besteht.

8. Verfahren zum Verbinden von zwei Kunststoffrohrenden durch Widerstandsschweißen unter Verwendung einer Elektroschweißmuffe und eines Thermoelementes nach einem der vorangehenden Ansprüche, **gekennzeichnet durch** die folgenden Schritte:
a. Aufschieben der Elektroschweißmuffe auf die beiden Rohrenden zur Überbrückung derselben;
b. Einlegen des Thermoelementes zwischen Rohrwandung und Elektroschweißmuffenwandung;
c. Aufschrumpfen der Elektroschweißmuffe auf die Rohrenden **durch** Wärmebehandlung der Muffe; und
d. Anlegen eines elektrischen Stromes an das Thermoelement zur Erhitzung desselben auf die erforderliche Plastifizier/Schmelztemperatur des Kunststoffes der Rohrenden.

9. Verfahren nach Anspruch 8, **dadurch gekennzeichnet, daß** die Elektroschweißmuffe durch Druckaufbringung gegen die Rohrenden gepreßt wird.

10. Verfahren nach Anspruch 8 oder 9, **dadurch gekennzeichnet, daß** je ein Thermoelement einem Endbereich der Elektroschweißmuffe zugeordnet wird.

11. Verfahren nach einem der Ansprüche 8 bis 10, **dadurch gekennzeichnet, daß** die Anschlußabschnitte des Thermoelementes nach dem Schweißvorgang abgeschnitten werden.

12. Verfahren nach einem der Ansprüche 8 bis 11, **dadurch gekennzeichnet, daß** der zwischen der Elektroschweißmuffe und der Rohrwandung verbleibende Raum nach dem Verschweißen ausgeschäumt wird.

13. Verfahren nach einem der Ansprüche 8-12, **dadurch gekennzeichnet, daß** es zum Verschweißen der Kunststoffummantelung von gasförmige oder flüssige Medien führenden Rohren eingesetzt wird.

14. Verfahren nach Anspruch 13, **dadurch gekennzeichnet, daß** es zum Verschweißen der ausgeschäumten Mantelrohre von gäsförmige oder flüssige Medien führenden Rohren eingesetzt wird.

15. Elektroschweißmuffe zur Durchführung des Verfahrens nach einem der Ansprüche 8 bis 14 mit zylindrischer Form, **dadurch gekennzeichnet, daß** sie einen Durchmesser aufweist, der um soviel größer ist als der Durchmesser der zu verbindenden Rohrenden, daß das Thermoelement zwischen Muffenwandung und Rohrwandung einschiebbar ist.

16. Elektroschweißmuffe nach Anspruch 15, **dadurch gekennzeichnet, daß** sie als Schrumpfmuffe ausgebildet ist.

17. Elektroschweißmuffe nach einem der Ansprüche 15 oder 16, **dadurch gekennzeichnet, daß** sie längsmittig einen radial erweiterten Bereich (11) besitzt.

18. Elektroschweißmuffe nach einem der Ansprüche 15 bis 17, **dadurch gekennzeichnet, daß** sie eine Einfüll- und eine Entlüftungsöffnung sowie diese verschließende Stopfen (13) besitzt.

## Claims

1. A thermic element (1) for carrying out a resistance welding process for joining two plastic pipe ends, said thermic element being formed as metal band having a plurality of round holes (4), **characterized in that** the round holes (4) of adjacent rows of holes are offset with respect to one another, the distance between adjacent round holes (4) is smaller than the hole diameter, and the thermic element (1) is provided for an electrofusion coupler (5) for establishing a coupler lap joint.

2. The thermic element according to claim 1, **characterized in that** the metal band consists of a grid structure or sieve structure.

3. The thermic element according to one of the preceding claims, **characterized in that** the round holes (4) have a diameter or width of 2-6 mm and a distance from one another of 0,5-2 mm.

4. The thermic element according to one of the preceding claims, **characterized in that** the metal band (2) has joining portions (3) for a welding transformer which form an angle with the longitudinal axis of the metal band.

5. The thermic element according to claim 4, **characterized in that** the joining portions (3) are located at the ends of the band.

6. The thermic element according to claim 4 or 5, **characterized in that** the joining portions (3) extend perpendicularly to the longitudinal axis of the band.

7. The thermic element according to one of the preceding claims, **characterized in that** it consists of copper.

8. A process for joining two plastic pipe ends through resistance welding with the use of an electrofusion coupler and a thermic element according to one of the preceding claims, **characterized by** the following steps:
a. Pushing the electrofusion coupler onto both pipe ends for bridging the same;
b. introducing the thermic element between the pipe wall and the electrofusion coupler wall;
c. shrinking the electrofusion coupler onto the pipe ends through heat treatment of the coupler; and
d. applying an electric current to the thermic element for heating of the same to the necessary plastifying/melting temperature of the plastic material of the pipe ends.

9. The process according to claim 8, **characterized in that** the electrofusion coupler is pressed against the pipe ends through the application of pressure.

10. The process according to claim 8 or 9, **characterized in that** a respective thermic element is associated with one end region of the electrofusion coupler.

11. The process according to one of the claims 8 to 10, **characterized in that** the joining portions of the thermic element are cut after the welding process.

12. The process according to one of the claims 8 to 11, **characterized in that** the space remaining between the electrofusion coupler and the pipe wall is foamed after the welding.

13. The process according to one of the claims 8-12, **characterized in that** it is used for welding the plastic sheath of pipes containing gaseous or liquid substances.

14. The process according to claim 13, **characterized in that** it is used for welding the foamed sheath pipes of pipes containing gaseous or liquid substances.

15. An electrofusion coupler for carrying out the process according to one of the claims 8 to 14 having a cylindrical shape, **characterized in that** it has a diameter which is larger than the diameter of the pipe ends which have to be connected for such a value that the thermic element can be introduced between the coupler wall and the pipe wall.

16. The electrofusion coupler according to claim 15, **characterized in that** it es formed as shrinking coupler.

17. The electrofusion coupler according to claim 15 or 16, **characterized in that** it includes a radially enlarged region (11) in its longitudinal center.

18. The electrofusion coupler according to one of the claims 15 to 17, **characterized in that** it includes a filling opening and an evacuation opening as well as plugs (13) for closing the same.

## Revendications

1. Thermoélément (1) pour la réalisation d'une opération de soudage par résistance en vue de relier les extrémités de deux tubes en matière plastique, lequel thermoélément est configuré comme bande métallique qui présente une pluralité de trous ronds (4), **caractérisé en ce que** les trous ronds (4) de séries voisines de trous sont disposés à décalage mutuel, **en ce que** l'écart entre des trous ronds (4) voisins est plus petit que le diamètre des trous et **en ce que** le thermoélément (1) est prévu pour un manchon (5) de soudage électrique en vue de l'établissement d'un joint de manchon à superposition.

2. Thermoélément selon la revendication 1, **caractérisé en ce que** la bande métallique est constituée d'une structure en treillis ou en tamis.

3. Thermoélément selon l'une des revendications précédentes, **caractérisé en ce que** les trous ronds (4) présentent un diamètre ou une largeur de 2 à 6 mm et un écart de 0,5 à 2 mm.

4. Thermoélément selon l'une des revendications précédentes, **caractérisé en ce que** la bande métallique (2) présente des parties de raccordement (3) pour un transformateur de soudage oblique par rapport à son axe longitudinal.

5. Thermoélément selon la revendication 4, **caractérisé en ce que** les parties de raccordement (3) sont situées aux extrémités de la bande.

6. Thermoélément selon la revendication 4 ou 5, **caractérisé en ce que** les parties de raccordement (3) s'étendent perpendiculairement par rapport à l'axe longitudinal de la bande.

7. Thermoélément selon l'une des revendications précédentes, **caractérisé en ce qu'**il est réalisé en cuivre.

8. Procédé pour relier les extrémités de deux tubes en matière synthétique par soudage par résistance et recours à un manchon de soudage électrique et à un thermoélément selon l'une des revendications précédentes, **caractérisé par** les étapes suivantes:
a. passage du manchon de soudage électrique sur les deux extrémités de tubes pour ponter ces dernières;
b. introduction du thermoélément entre la paroi du tube et la paroi du manchon de soudage électrique;
c. rétraction du manchon de soudage électrique sur les extrémités de tubes par traitement thermique du manchon; et
d. application d'un courant électrique au thermoélément pour chauffer ce dernier à la température nécessaire de plastification/fusion de la matière synthétique des extrémités des tubes.

9. Procédé selon la revendication 8, **caractérisé en ce que** le manchon de soudage électrique est repoussé contre les extrémités des tubes par l'application d'une poussée.

10. Procédé selon la revendication 8 ou 9, **caractérisé en ce qu'**un thermoélément est associé à chaque zone d'extrémité du manchon de soudage électrique.

11. Procédé selon l'une des revendications 8 à 10, **caractérisé en ce que** les parties de raccordement du thermoélément sont découpées après l'opération de soudage.

12. Procédé selon l'une des revendications 8 à 11, **caractérisé en ce que** l'espace restant entre le manchon de soudage électrique et la paroi du tube est rempli de mousse après le soudage.

13. Procédé selon l'une des revendications 8 à 12, **caractérisé en ce que** pour souder l'enveloppe en matière synthétique, on utilise des tubes qui conduisent des fluides gazeux ou liquides.

14. Procédé selon la revendication 13, **caractérisé en ce qu'**il est utilisé pour le soudage des tubes d'enveloppe moussés de tubes conduisant des fluides gazeux ou liquides.

15. Manchon de soudage électrique en vue de la mise en oeuvre du procédé selon l'une des revendications 8 à 14, présentant une forme cylindrique, **caractérisé en ce qu'**il présente un diamètre qui est supérieur au diamètre des extrémités des tubes à relier d'une valeur telle que le thermoélément puisse être inséré entre la paroi du manchon et la paroi du tube.

16. Manchon de soudage électrique selon la revendication 15, **caractérisé en ce qu'**il est configuré comme manchon à rétraction.

17. Manchon de soudage électrique selon l'une des revendications 15 ou 16, **caractérisé en ce qu'**il possède au milieu de sa longueur une zone (11) élargie radialement.

18. Manchon de soudage électrique selon l'une des revendications 15 à 17, **caractérisé en ce qu'**il possède une ouverture de remplissage et une ouverture d'évent, ainsi que des bouchons (13) qui ferment ces ouvertures.
